# EUROPÄISCHE PATENTANMELDUNG

(11) **EP 2 495 694 A1**
(43) Veröffentlichungstag der Anmeldung: **05.09.2012**
(21) Anmeldenummer: 12157730.8
(22) Anmeldetag: 01.03.2012
(51) Int. Cl.: G06Q 10/06

(54) **Verfahren zur Verwaltung von Flurförderzeugen**

(30) Priorität: 04.03.2011 DE 102011013104; 04.04.2011 DE 102011016030
(71) Anmelder: STILL GmbH, 22113 Hamburg (DE)
(72) Erfinder: Bergmann, Ansgar, 22941 Bargteheide (DE)
(74) Vertreter: Geirhos, Johann

(57) **Zusammenfassung**

Bei einem Verfahren zur Verwaltung von Flurförderzeugflotten, bei dem den Flurförderzeugen (2) und/oder Fahrern (3) der Flurförderzeuge (2) Attribute (A1,A2,A3,A4,Ar,Am) zugeordnet werden, insbesondere Einsatzart, Einsatzort oder Einsatzzeiten bestimmende Attribute, erfolgen die Schritte:
- Bestimmen von Bereichen (B1,B2) des Einsatzes der Flurförderzeuge (2) und/oder Bereichen (B1,B2) des Einsatzes der Fahrer (3),
- Festlegen von Attributen (A1,A2,A3,A4) der Flurförderzeuge (2) und oder Attributen (Ar,Am) der Fahrer (3) für jeden Bereich (B1,B2) und
- Verknüpfen von Flurförderzeugen (2) und/oder Fahrern (3) mit mindestens einem Bereich (B1,B2) und Übernahme der Attribute (A1,A2,A3,A4,Ar,Am) des Bereichs (B1,B2) für das Flurförderzeug (2) und/oder den Fahrer (3).

## Beschreibung

Es ist bekannt, für die Verwaltung und Überwachung von Fahrzeugflotten, insbesondere von Flotten aus Flurförderzeugen, Daten verarbeitende Systeme einzusetzen. Diese Systeme ermöglichen in Unternehmen mit einer großen Anzahl von Flurförderzeugen, wie etwa einer Gabeistapierflotte in einer Industrieproduktion oder Lagerbereichen, die Überwachung und Kontrolle der Fahrzeugzugänge/-abgänge sowie die Verwaltung des Zustandes der Fahrzeuge.

Dabei ist es erforderlich, jedem Flurförderzeug in Form von Attributen bestimmte Eigenschaften oder Vorgaben zuzuordnen. Dies können beispielsweise Attribute über die Einsatzart, den Einsatzort oder Einsatzzeiten sowie Einsatzzeiträume sein, durch die zum Beispiel Beschränkungen für diese Werte festgelegt werden. Ebenso werden diese Attribute innerhalb einer Verwaltung einer Flurförderzeugflotte auch den Fahrern zugeordnet. Auch für diese gelten Attribute wie Einsatzart, Einsatzort oder Einsatzzeiten. Beispielsweise sind für einen bestimmten Typ von Flurförderzeug nur ein Teil der Fahrer in einem Betreib für die Bedienung zugelassen, der eine entsprechende Einweisung erhalten hat. Diese den Fahrern und den Flurförderzeugen zugeordneten Attribute werden für die Fahrer wie auch für die Flurförderzeuge in einer Datenbank mit diesen verknüpft und abgespeichert, so dass über eine Software die Möglichkeit besteht, die Flurförderzeugflotte zu verwalten. Dabei müssen die Attribute per Hand eingegeben und eingepflegt werden, wenn ein Flurförderzeug neu in das System aufgenommen wird, oder ein weiterer Fahrer hinzukommt, für den z.B. Berechtigungen für Flurförderzeuge gesetzt werden müssen.

Dies ist in der Regel zeitaufwändig und aufgrund des von Hand durchgeführten Vorgangs auch fehlerträchtig. Wenn bei einer Flurförderzeugflotte von mehreren hundert Fahrzeugen und einem entsprechend großen Bestand an Fahrern alle Daten von Hand eingegeben werden, ist dies umso zeitaufwendiger. Werden nun für gewisse Bereiche die Attribute oder Einstellungen geändert, so müssen zum Beispiel bei allen Fahrern und/oder allen Flurförderzeugen, die hiervon betroffen sind, die entsprechenden Attribute manuell geändert werden. Dies ist zeitaufwändig und birgt die Gefahr versteckter Fehler durch falsche oder vergessene Eintragungen.

Es ist daher Aufgabe der vorliegenden Erfindung, ein Verfahren zur Verwaltung von Flurförderzeugflotten sowie ein Computersystem zur Verfügung zu stellen, mit denen es möglich ist, die oben genannten Nachteile zu vermeiden.

Diese Aufgabe wird durch ein Verfahren zur Verwaltung von Flurförderzeugflotten mit den Merkmalen des Anspruchs 1 sowie ein Computersystem mit den Merkmalen des Anspruchs 9 gelöst. Vorteilhafte Ausgestaltungen der Erfindung sind in den Unteransprüchen angegeben.

Die Aufgabe wird erfindungsgemäß dadurch gelöst, dass ein Verfahren zur Verwaltung von Flurförderzeugflotten, bei dem den Flurförderzeugen und/oder Fahrern der Flurförderzeuge Attribute zugeordnet werden, insbesondere Einsatzart, Einsatzort oder Einsatzzeiten bestimmende Attribute, die Schritte aufweist:
- Bestimmen von Bereichen des Einsatzes der Flurförderzeuge und/oder Bereichen des Einsatzes der Fahrer,
- Festlegen von Attributen der Flurförderzeuge und oder Attributen der Fahrer für jeden Bereich und
- Verknüpfen von Flurförderzeugen und/oder Fahrern mit mindestens einem Bereich und Übernahme der Attribute des Bereichs für das Flurförderzeug und/oder den Fahrer.

Die Attribute werden nicht an die einzelnen Objekte gebunden, die in der Flurförderzeugflotte verwaltet werden müssen, zum einen Flurförderzeuge, aber auch bei entsprechender Auslegung der Verwaltung die Fahrer, sondern an die Bereiche. Dabei können die Bereiche je nach Bedarf definiert werden und stellen beispielsweise ein räumliches Einsatzgebiet wie ein bestimmtes Produktionsgelände oder eine Lagerhalle dar. Diese Bereiche weisen Attribute auf, die für eine Mehrzahl von Flurförderzeugen und/oder Fahrern in diesem Bereich gelten, wobei jedoch darüber hinaus die Flurförderzeuge und Fahrer in weiter unterschiedene Gruppen aufgeteilt werden können. Wenn eine Verknüpfung erfolgt, werden die Attribute dem Flurförderzeug bzw. dem Fahrer vererbt und zugeordnet. Durch diese Vererbung von Attributen müssen die Attribute nur einmal eingegeben werden und nur an einer Stelle gepflegt werden. Auch nach einer erfolgten Verknüpfung wird bei einer Änderung der Attribute diese Änderung bei allen Flurförderzeugen und/oder Fahrern wirksam, die das entsprechende Attribut übernommen haben. Der Aufwand für die Verwaltung einer Flurförderzeugflotte wird dadurch erheblich verringert, da nur an einer Stelle zentral die Attribute und Daten geändert werden müssen.

Es können zu einem oder mehreren Bereichen einander entsprechende Attribute definiert sein.

Vorteilhaft werden bei einem Verknüpfen als Wechsel eines Flurförderzeugs und/oder eines Fahrers von einem Bereich zu einem anderen die Attribute getauscht, wobei die einander entsprechenden des bisherigen Bereichs ersetzt und die übrigen des bisherigen Bereichs gelöscht werden.

Der Wechsel der Einsatzart oder des Einsatzortes eines Flurförderzeugs ebenso wie eines Fahrers erfordert oftmals umfangreiche Änderungen der Attribute. Dabei kann die Änderung der Verknüpfung für eine große Anzahl von Flurförderzeug und/oder Fahrer gleichzeitig erfolgen, indem diese markiert werden und gemeinsam mit einem neuen Bereich verknüpft werden. Dies verhindert, dass bei einer Mahrzahl von Änderungen versehentlich bei einigen Flurförderzeugen und/oder Fahrern alte Werte für die Attribute eingetragen bleiben.

In einer vorteilhaften Ausgestaltung des Verfahrens werden die Bereiche sowie Flurförderzeuge und/oder Fahrer grafisch durch Symboldarstellungen auf einem Bildschirm dargestellt und erfolgt das Verknüpfen durch Bewegen einer Symboldarstellung des Flurförderzeugs und/oder Fahrers auf eine Symboldarstellung eines Bereiches.

Durch dieses "Drag and Drop" Verfahren kann intuitiv verständlich und auf einfache Weise durch grafisches "Ziehen" die Verknüpfung erfolgen.

Die Attribute können Einsatzarten und/oder Einsatzorte und/oder Einsatzzeiten und/oder Maximalgeschwindigkeiten und/oder Hubhöhenbegrenzungen und/oder Maximallasten umfassen.

Zum Beispiel bei Lagerhallen, wenn diese von Flurförderzeugen mit einer theoretisch höheren Hubhöhe als die Deckenhöhe befahren werden, stellt die sichere Vermeidung von Falscheinträgen einen großen Sicherheitsgewinn dar. Wenn ein Attribut "maximale Hubhöhe" in der Lagerhalle richtig eingetragen wurde, wird dieses Attribut für den Bereich der Lagerhalle an alle verknüpften Flurförderzeuge richtig vererbt. Weitere Attribute, insbesondere Sicherheitsattribute, können etwa das Ein-/Ausschalten von Rundumleuchten, das Ein-/Ausschalten eines Suchers oder eine vorgeschriebene Schleichfahrt, etwa nach einem Unfall, darstellen.

In einer Weiterbildung des erfindungsgemäßen Verfahrens wird ein Fahrer als ein Bereich für ein Flurförderzeug bestimmt und die Verknüpfung erfolgt durch Anmelden des Fahrers auf dem Flurförderzeug.

Die Attribute können individuelle Einstellungen für den Fahrer und/oder Spracheinstellungen der Bedienvorrichtungen und/oder Beschränkungen umfassen.

Durch die Vererbung der Attribute werden bei jedem Flurförderzeug, bei dem sich der Fahrer anmeldet, die Attribute übernommen und es kann in abhängig von dem Flurförderzeug eine Anpassung an den Fahrer erfolgen.

In einer vorteilhaften Weiterbildung des Verfahrens erfolgt die Verknüpfung für ein Flurförderzeug durch Erkennen des Einfahrens in einen durch den Ort definierten Bereich und werden die Attribute temporär übernommen.

Die Aufgabe wird auch durch ein Computersystem gelöst, auf dem ein zuvor beschriebenes Verfahren abläuft.

Das Computersystem weist die zuvor bereits dargestellten Vorteile auf. Dabei kann es sich um einen einzelnen Computer handeln, mit dem die Verwaltung der Flurförderzeugflotte erfolgt, aber auch um ein Netzwerk, in das zum Beispiel auch Steuerungsrechner der Flurförderzeuge integriert sind, die beispielsweise die Einfahrt in einen durch die räumliche Ausdehnung, etwa zum Beispiel ein bestimmtes Lagerhaus, definierten Bereich durch eine Bereichserkennung erfassen.

Die Aufgabe wird auch durch ein entsprechendes Computerprogrammprodukt und ein Speichermedium gelöst, auf dem ein Computerprogrammprodukt gespeichert ist.

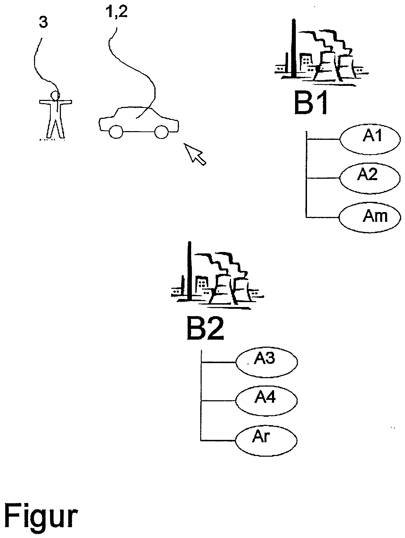

Weitere Vorteile und Einzelheiten der Erfindung werden anhand des in der schematischen Figur dargestellten Ausführungsbeispiels näher erläutert. Hierbei zeigt die Figur eine Bildschirmansicht des erfindungsgemäßen Verfahrens.

Ein erster Bereich B1 steht für einen ersten Produktionsstandort, an dem für das durch das Fahrzeugsymbol 1 dargestellte Flurförderzeug 2 die Attribute A1 und A2 gelten. Dies kann beispielsweise eine maximale Hubhöhe sein und eine Maximalgeschwindigkeit. Ein zweiter Produktionsstandort bestimmt einen zweiten Bereich B2, an dem entsprechende Attribute A3 und A4 für die maximale Hubhöhe und die Maximalgeschwindigkeit, jedoch mit abweichenden Werten gelten. Es können jedoch auch andere Werte und Eigenschaften als die hier nur beispielhaft genannte maximale Hubhöhe und Maximalgeschwindigkeit als Attribute den Bereichen B1, B2 zugeordnet werden. Der Bereich B1 weist noch ein Attribut Am und der Bereich B2 ein Attribut Ar auf, das bei einer Verknüpfung einem Fahrer 3 zugeordnet wird.

Wie durch den Mauszeiger angedeutet, kann das Fahrzeugsymbol 1 markiert werden und über z.B. den Bereich B1 gezogen werden. Das dem Fahrzeugsymbol 1 zugeordnete Flurförderzeug 2 übernimmt dann die Attribute A1 und A2. Werden die vererbten Attribute A1 und A2 nachträglich geändert, so wird diese Änderung auch bei dem Flurförderzeug 2 wirksam.

Wenn die Verknüpfung des Flurförderzeugs 2 von dem Bereich B1 zu dem Bereich B2 nachträglich durch Verschieben des Fahrzeugsymbols 1 geändert wird, so werden die Attribute A1 und A2 durch die entsprechenden Attribute A3 und A4 des Bereichs B2 ersetzt.

Ebenso können durch Markieren und Verschieben dem Fahrer 3 die Attribute Ar und Am zugeordnet werden.

## Patentansprüche

1. Verfahren zur Verwaltung von Flurförderzeugflotten, bei dem den Flurförderzeugen (2) und/oder Fahrern (3) der Flurförderzeuge (2) Attribute (A1,A2,A3,A4,Ar,Am) zugeordnet werden, insbesondere Einsatzart, Einsatzort oder Einsatzzeiten bestimmende Attribute,
mit den Schritten:
- Bestimmen von Bereichen (B1,B2) des Einsatzes der Flurförderzeuge (2) und/oder Bereichen (B1,B2) des Einsatzes der Fahrer (3),
- Festlegen von Attributen (A1,A2,A3,A4) der Flurförderzeuge (2) und oder Attributen (Ar,Am) der Fahrer (3) für jeden Bereich (B1,B2) und
- Verknüpfen von Flurförderzeugen (2) und/oder Fahrern (3) mit mindestens einem Bereich (B1,B2) und Übernahme der Attribute (A1,A2,A3,A4,Ar,Am) des Bereichs (B1,B2) für das Flurförderzeug (2) und/oder den Fahrer (3).

2. Verfahren nach Anspruch 1,
**dadurch gekennzeichnet,**
**dass** zu einem oder mehreren Bereichen (B1,B2) einander entsprechende Attribute (A1,A2,A3,A4) definiert sind.

3. Verfahren nach Anspruch 2,
**dadurch gekennzeichnet,**
**dass** bei einem Verknüpfen als Wechsel eines Flurförderzeugs (2) und/oder eines Fahrers von einem Bereich (B1) zu einem anderen Bereich (B2) die Attribute (A1,A2,A3,A4) getauscht werden, wobei die einander entsprechenden des bisherigen Bereichs ersetzt und die übrigen des bisherigen Bereichs gelöscht werden.

4. Verfahren nach einem der Ansprüche 1 bis 3,
**dadurch gekennzeichnet,**
**dass** die Bereiche (B1,B2) sowie Flurförderzeuge (2) und/oder Fahrer (3) grafisch durch Symboldarstellungen (1) auf einem Bildschirm dargestellt werden und das Verknüpfen durch Bewegen einer Symboldarstellung (1) des Flurförderzeugs (2) und/oder Fahrers (3) auf eine Symboldarstellung eines Bereiches (B1,B2) erfolgt.

5. Verfahren nach einem der Ansprüche 1 bis 4,
**dadurch gekennzeichnet,**
**dass** die Attribute (A1,A2,A3,A4) Einsatzarten und/oder Einsatzorte und/oder Einsatzzeiten und/oder Maximalgeschwindigkeiten und/oder Hubhöhenbegrenzungen und/oder Maximallasten umfassen.

6. Verfahren nach einem der Ansprüche 1 bis 5,
**dadurch gekennzeichnet,**
**dass** ein Fahrer als ein Bereich für ein Flurförderzeug bestimmt wird und die Verknüpfung durch Anmelden des Fahrers auf dem Flurförderzeug erfolgt.

7. Verfahren nach Anspruch 6,
**dadurch gekennzeichnet,**
**dass** die Attribute individuelle Einstellungen für den Fahrer und/oder Spracheinstellungen der Bedienvorrichtungen und/oder Beschränkungen umfassen.

8. Verfahren nach einem der Ansprüche 1 bis 7,
**dadurch gekennzeichnet,**
**dass** die Verknüpfung für ein Flurförderzeug durch Erkennen des Einfahrens in einen durch den Ort definierten Bereich (B1,B2) erfolgt und die Attribute temporär übernommen werden.

9. Computersystem auf dem ein Verfahren nach einem der Ansprüche 1 bis 8 abläuft.

10. Computerprogrammprodukt, das ablaufend auf einem Computersystem nach Anspruch 9 ein Verfahren nach einem der Ansprüche 1 bis 8 durchführt.

11. Speichermedium auf dem ein Computerprogrammprodukt nach Anspruch 10 gespeichert ist.
